# FASCICULE DE BREVET EUROPEEN

(11) **EP 3 307 608 B1**
(45) Date de publication et mention de la délivrance du brevet: **07.08.2019**
(21) Numéro de dépôt: 16738480.9
(22) Date de dépôt: 03.06.2016
(51) Int. Cl.: B62D 53/04, B60T 7/10, B60T 7/20, B62D 63/02, B62D 63/06

(54) **REMORQUE COMPORTANT UN MOYEN D'IMMOBILISATION, VÉHICULE COMMANDANT L'IMMOBILISATION ET L'ATTELAGE RÉVERSIBLES DE LA REMORQUE, ENSEMBLE FORMÉ PAR L'ATTELAGE D'UNE TELLE REMORQUE ET D'UN TEL VÉHICULE**
ANHÄNGER MIT IMMOBILISIERUNGSVORRICHTUNG, FAHRZEUG ZUR STEUERUNG DER REVERSIBLEN IMMOBILISIERUNG UND KUPPLUNG DES ANHÄNGERS SOWIE DURCH DIE KUPPLUNG EINES DERARTIGEN ANHÄNGERS UND EINES DERARTIGEN FAHRZEUGS HERGESTELLTE ANORDNUNG
TRAILER COMPRISING AN IMMOBILISATION MEANS, VEHICLE CONTROLLING THE REVERSIBLE IMMOBILISATION AND COUPLING OF THE TRAILER, AND ASSEMBLY FORMED BY THE COUPLING OF SUCH A TRAILER AND SUCH A VEHICLE

(30) Priorité: 09.06.2015 FR 1555244
(43) Date de publication de la demande: 18.04.2018
(73) Titulaire: Renault S.A.S., 92100 Boulogne-Billancourt (FR)
(72) Inventeur: GEOFFROY, Pierre, 92260 Fontenay Aux Roses (FR); LOMBARD-RAMEL, Eric, 28700 Denonville (FR)
(86) Numéro de dépôt international: PCT/FR2016/051332
(87) Numéro de publication internationale: WO 2016/198767

(56) Documents cités:
- EP-A1- 2 151 373
- BE-A- 486 604
- CH-A2- 705 801
- DE-U1-202012 002 846

## Description

### Domaine de l'invention :

La présente invention concerne une remorque comportant un moyen d'immobilisation, un véhicule commandant l'immobilisation et l'attelage réversibles de la remorque, ainsi qu'un ensemble formé par l'attelage d'une telle remorque et d'un tel véhicule.

### Etat de la technique :

On connaît, notamment via le document EP 2 151 373 A1 un ensemble attelé dans lequel une remorque comprenant un unique essieu est attachée à la partie arrière d'un véhicule tracteur de façon que l'essieu de la remorque soit placé au plus près de l'essieu arrière du véhicule tracteur. La partie avant de la remorque s'avance au plus près d'une cabine ou d'un habitacle du véhicule tracteur, et est fixée au véhicule tracteur par des moyens d'accouplement réversible. Une telle remorque est assujettie au véhicule tracteur sans articulation relative possible et constitue une extension arrière du véhicule tracteur, interchangeable, permettant le chargement ou déchargement de marchandises spécifiques tout en offrant des possibilités de manoeuvres grandement facilitées par rapport à des ensembles attelés avec articulation, qui s'avèrent en général délicats à manoeuvrer notamment en situation de recul. Une telle articulation forme un ensemble quasiment monobloc avec le véhicule tracteur, tout en ayant des essieux distincts et indépendants entre le véhicule tracteur et la remorque, ce qui offre également des capacités de chargement supplémentaires et une plus grande souplesse d'utilisation.

Une telle remorque comprend un dispositif de freinage relié à un levier de frein à main embarqué sous la remorque de telle sorte que l'opération d'attelage de la remorque au véhicule tracteur s'effectue par une étape de déplacement du véhicule tracteur en direction de la remorque alors en l'état freiné, puis l'accrochage de la remorque au véhicule tracteur, et enfin une opération de déblocage de l'état freiné de la remorque qui nécessite une opération manuelle consistant à basculer le levier de frein à main situé sous la remorque. L'opération de libération de la remorque du véhicule tracteur s'effectue par des étapes dans un ordre inversé. Les opérations d'attelage sont longues et fastidieuses dans leur mise en oeuvre et d'autant plus difficiles à réaliser lorsque l'espace sous véhicule ou remorque devient inaccessible.

Ce phénomène est particulièrement prégnant dans le cas d'attelages à répétition entre un véhicule tracteur et l'une parmi plusieurs remorques.

En outre, la remorque décrite est conçue uniquement afin d'être déplacée par un véhicule tracteur de sorte qu'une telle remorque ne peut être utilisée en tant que structure roulante de transport pour des volumes inférieurs à 5 m3 pouvant nécessiter un déplacement manuel depuis un quai de chargement jusqu'à un quai d'attelage à un véhicule tracteur.

### But de l'invention :

L'invention a pour but de proposer un dispositif d'immobilisation d'une remorque et un ensemble constitué d'un véhicule tracteur et d'une remorque mutuellement attelés en vue de pallier tout ou partie des inconvénients précédents.

### Objet de l'invention :

A cet effet, l'invention a pour objet une remorque destinée à être attelée à un véhicule tracteur, la remorque comprenant un châssis relié à des roues et un moyen d'attelage apte à la rendre solidaire du véhicule tracteur. La remorque comprend un moyen d'immobilisation agissant sur au moins l'une des roues afin de bloquer en rotation la roue avec le châssis. De manière remarquable, ledit moyen d'immobilisation comprend au moins un levier articulé sélectivement entre une position de repos dans laquelle les roues sont bloquées en rotation avec le châssis et une position active dans laquelle les roues sont libres en rotation par rapport au châssis.

Le recours à au moins un levier articulé pour opérer de manière réversible l'immobilisation de la remorque permet de réaliser un attelage du véhicule tracteur alors mobile sur la remorque en l'état immobile sur le sol. Cela permet au véhicule tracteur d'opérer un changement rapide de remorque. Selon l'invention, le moyen d'attelage comprend un levier articulé sélectivement entre une position de repos dans laquelle les roues sont bloquées en rotation avec le châssis et une position active dans laquelle les roues sont libres en rotation par rapport au châssis, le levier étant apte à être articulé par l'intermédiaire d'un dispositif de commande manuelle embarqué sur le véhicule tracteur.Un tel arrangement du levier assujetti au dispositif de commande embarqué sur le véhicule permet une action sur les moyens d'immobilisation depuis le véhicule.

La remorque objet de l'invention peut en outre comporter l'une quelconque des caractéristiques mentionnées ci-après, prises séparément ou en combinaison entre elles :
- elle comprend un moyen de préhension relié à pivotement au châssis sélectivement entre une position de rangement dans laquelle les roues sont bloquées en rotation avec le châssis et une position déployée dans laquelle les roues sont libres en rotation par rapport au châssis, ledit moyen de préhension étant apte à être articulé manuellement afin d'opérer la manipulation de la remorque. Un tel moyen de préhension permet dans sa position de rangement de bloquer la remorque sur le sol de sorte que son chargement est facilité et sécurisé. Il permet dans sa position déployée de déplacer manuellement la remorque, par exemple d'une zone de chargement à une zone d'embarquement où un véhicule tracteur vient s'atteler à la remorque pour effectuer une livraison ;
- la remorque comprend une roue jockey articulée apte à être disposée sélectivement dans une position abaissée permettant un appui avant de la remorque sur le sol pour en permettre sa manipulation, ou dans une position remontée permettant de lier la remorque au véhicule tracteur via ledit moyen d'attelage. Une telle position abaissée permet à la remorque de disposer d'un nombre de roues suffisantes pour en assurer sa stabilité et son déplacement avec un effort réduit, tout du moins acceptable pour un opérateur. Dans sa position remontée, le véhicule tracteur remplace le soutien réalisé par la roue jockey. Le passage de la position abaissée à la position remontée s'effectue en concomitance d'un rapprochement de la partie avant de la remorque vers la partie arrière du véhicule tracteur lors de l'attelage de l'un à l'autre ;
- ledit moyen d'immobilisation comprend un disque cranté monté à rotation avec un moyeu de fixation d'une roue sur le châssis et un étrier autobloquant apte à venir en prise avec le disque cranté. Un tel moyen d'immobilisation est de conception simple et robuste dans son fonctionnement ;
- ledit moyen d'immobilisation comprend un répartiteur d'effort reliant l'étrier autobloquant à au moins un levier de sorte qu'en position active du levier, le répartiteur transmets à l'étrier autobloquant un contre-effort s'opposant au blocage de la roue. Un tel répartiteur est remarquable en ce qu'il permet de prendre simultanément en considération la position relative de chacun des leviers, qu'il s'agisse du levier situé un niveau du moyen d'attelage de la remorque qui est destiné à coopérer avec un moyen de commande embarqué dans le véhicule tracteur, ou du levier formé par un bras de préhension utilisé pour un déplacement manuel de la remorque. Ainsi, les deux leviers agissent sur le même moyen d'immobilisation pour permettre le déplacement de la remorque ;
- l'étrier autobloquant comprend au moins une came mobile, un carter et un ressort de rappel de la came mobile en saillie hors du carter dans une position de blocage en rotation du disque cranté. Un tel étrier peut être rapporté facilement sur le châssis de la remorque. Du fait de sa simplicité de fonctionnement, il est robuste d'utilisation et peu coûteux dans sa fabrication.

L'invention a également pour objet un véhicule tracteur comportant un moyen d'attelage réversible apte à coopérer avec le moyen d'attelage complémentaire de la remorque conforme aux caractéristiques susmentionnées. De façon remarquable, un tel véhicule tracteur est du type d'un quadricycle ce qui en fait un véhicule léger et peu polluant dans son fonctionnement.

Le véhicule tracteur peut comprendre une poignée articulée sélectivement et manuellement entre une position de roulage dans laquelle le poussoir est apte à exercer un effort d'appui sur le levier de la remorque pour la rendre mobile, et une position d'immobilisation de la remorque dans laquelle le poussoir est apte à libérer le levier d'un appui pour immobiliser la remorque. Il devient ainsi possible depuis une commande de la poignée comprise dans la cabine du véhicule d'activer ou non l'état d'immobilisation de la remorque.

La poignée peut être reliée à un crochet afin de libérer la liaison réversible entre ledit moyen d'attelage du véhicule tracteur et ledit moyen d'attelage complémentaire de la remorque. Il devient ainsi possible par une action de déplacement en rotation d'une poignée d'opérer la commande de l'immobilisation de la remorque et la commande de la libération de l'attelage entre la remorque et le véhicule, rendant d'autant plus facile pour le véhicule tracteur son changement de remorque dans une zone d'embarquement.

L'invention concerne également un ensemble comportant un véhicule tracteur tel que précédemment décrit assemblé à une remorque comportant les caractéristiques susmentionnées dans lequel le levier est disposé à proximité d'un poste de conduite du véhicule tracteur de sorte que les opérations réversibles d'attelage de la remorque au véhicule tracteur s'effectuent depuis le poste de conduite du véhicule tracteur. Le temps de changement d'une remorque par une autre remorque s'en trouve réduit, l'opérateur n'ayant plus besoin de descendre du véhicule tracteur pour opérer l'immobilisation de la remorque et la libération de l'attelage.

### Exposé de l'invention :

L'invention sera mieux comprise à la lecture de la description suivante d'un exemple non limitatif de l'invention, et à la lumière des dessins annexés sur lesquels :
- la figure 1 représente une vue partielle de côté d'un ensemble attelé comprenant un véhicule tracteur et une remorque selon l'invention,
- la figure 2 représente une vue de côté de la remorque de la figure 1 seule, laquelle comporte un moyen de maintien dans une position libre de désaccouplement du véhicule tracteur, formé principalement d'une roue jockey, étant illustrée en position relevée,
- la figure 3 est une vue en perspective partielle d'un dispositif d'attelage de la remorque au véhicule tracteur relié à un premier moyen de commande, le dispositif d'attelage étant dans une position verrouillée de liaison de la remorque au châssis du véhicule tracteur,
- la figure 4 est une vue en perspective partielle d'un second moyen de commande du dispositif d'attelage de la figure 3,
- les figures 5 et 6 correspondent à un agrandissement d'une partie la remorque, respectivement d'un dispositif de blocage en rotation d'un moyeu de roue, et un étrier du dispositif de blocage dans une position bloquée du moyeu de roue.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.

Les notions avant-arrière s'entendent par rapport au sens de marche normal du véhicule et de la remorque qui est dirigé vers l'avant.

Dans l'ensemble du texte, les directions et orientations sont indiquées par rapport à la direction longitudinale, transversale, verticale, ou à une orientation horizontale ou verticale.

Dans ce qui suit, on entend par « semi-remorque », une remorque dont le point d'attelage ou d'accrochage au véhicule tractant est situé au-dessus ou en avant de l'essieu arrière de ce véhicule.

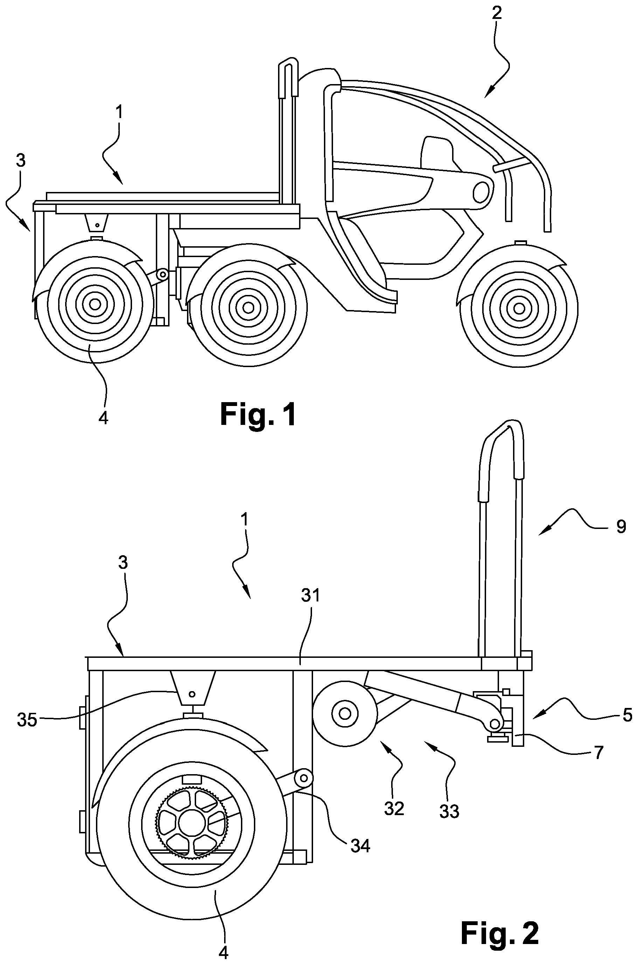

La figure 1 représente, selon une vue du côté droit, un ensemble attelée comprenant un véhicule 2 tracteur auquel est attelée une remorque 1. Du fait que l'extrémité avant de la remorque s'étend au-dessus de l'essieu arrière du véhicule 2 tracteur, une telle remorque peut également être qualifiée de semi-remorque.

Le véhicule 2 tracteur illustré est un quadricycle construit sur une base structurelle modifiée d'un véhicule Renault Twizy®, qui est donné à titre d'exemple nullement limitatif.

Le véhicule 2 tracteur est partiellement représenté, en ce sens que seule la partie structurelle et de carrosserie arrière est illustrée en intégralité, la partie avant étant que sommairement détaillée du fait qu'elle concerne moins l'objet de l'invention. Pour cette raison, la partie avant pourrait être de forme et de conception multiple sans que cela n'ait une incidence sur l'objet de l'invention.

Le véhicule 2 tracteur est sensiblement du type d'un véhicule à plateau, en ce sens qu'il comprend une cabine avant prolongée vers l'arrière par une structure sensiblement plate sur laquelle repose une partie avant de la remorque 1. Le véhicule 2 tracteur comprend une cabine accueillant un conducteur, à l'arrière de laquelle est ménagé un plateau de réception de la partie avant de la remorque 1 selon l'invention. Le plateau est situé sensiblement à mi-hauteur du véhicule tracteur et surplombe son essieu arrière.

Lorsque la remorque 1 est attelée sur le véhicule 2 tracteur, l'ensemble forme sensiblement un véhicule à six roues, deux roues d'extrémité avant, dont une roue avant droite est rendue visible à la droite de la figure, et reliées à un dispositif de direction comprenant un volant de direction (non représenté), deux roues centrales reliées à un dispositif de propulsion, et deux roues d'extrémité arrière, dont une roue arrière droite est rendue visible à la gauche de la figure ,1 et portant en partie la charge de la remorque 1, l'autre partie de la charge étant distribuée aux roues centrales.

La figure 2 représente plus en détail la remorque 1 selon l'invention. Celle-ci est réalisée à partir d'une structure tubulaire rigide typiquement réalisée en profilés aluminium mécano-soudés et comprend un plateau 31 de chargement représenté « à vide » sur les figures 1 et 2, c'est-à-dire sans la présence d'un container supérieur de chargement rapporté et fixé sur le plateau 31, ou de tout autre type de moyen de transport et/ou d'arrimage d'objets.

La remorque 1 comprend dans cet exemple un jeu de deux roues 4 latérales, ainsi qu'une partie avant en porte-à-faux par rapport aux roues 4 latérales.

Pour maintenir la remorque 1 d'aplomb, c'est-à-dire le plateau 3 horizontal, lorsque celle-ci n'est pas attelée au véhicule 2 tracteur, une roue jockey 32 est située à l'extrémité inférieure d'un dispositif 33 de support articulé dans sa partie supérieure à un élément de structure de la remorque, entre sélectivement une position abaissée (non représentée) permettant un appui de la partie avant de la remorque 1 sur le sol, et une position remontée (correspondant aux figures 1 et 2) dans laquelle la remorque 1 est attelée au véhicule 2 tracteur.

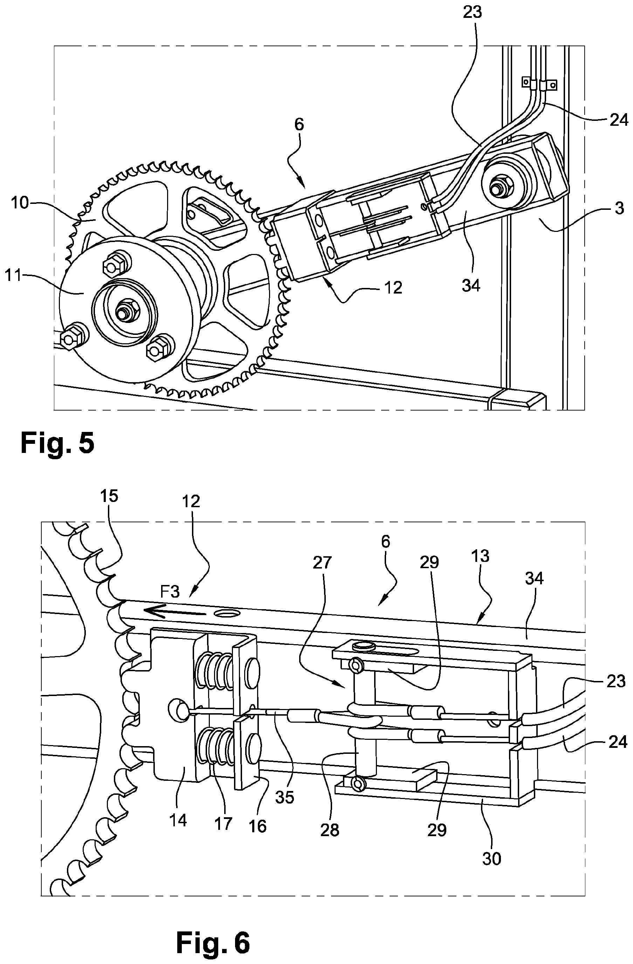

Chacune des roues 4 peut être reliée au châssis 3 par l'intermédiaire d'un dispositif 35 de suspension et d'un bras 34 articulé par l'une de ses extrémités, l'autre extrémité du bras 34 étant reliée au châssis 3 par une liaison pivot formée d'un arbre de rotation d'axe Y, l'ensemble étant rendu visible sur la figure 5.

La remorque 1 comprend en outre un moyen 5 d'attelage qui est en partie conçu de manière complémentaire à un moyen 20 d'attelage du véhicule 2 tracteur afin de permettre un verrouillage mutuel desdits moyens d'attelage 5 et 20.

Le moyen 5 d'attelage embarqué sur la remorque 1 est situé dans la partie avant de la remorque 1 et à la base du dispositif 33 de support articulé. Le moyen 20 d'attelage embarqué sur le véhicule tracteur, à proximité de la partie avant du plateau arrière jouxtant la cabine, comprend un verrou (non représenté) destiné à coopérer avec une came du moyen 5 d'attelage.

Dans un arrangement d'attelage, la remorque 1 est disposée de façon à ce que la partie avant du plateau 31 de chargement surplombe partiellement le plateau arrière du véhicule tracteur 2. Dans cette position, les roues 4 de la remorque 1 sont situées au plus près des roues arrière du véhicule 2 tracteur de façon à former un ensemble intégré dans lequel la remorque 1 constitue une extension quasiment rigide et non articulée vis-à-vis du véhicule 2 tracteur. L'expression « non articulée » doit être considéré globalement mais non strictement, car un léger débattement de la remorque 1 est prévu angulairement autour des axes Y et Z.

La remorque 1 comprend un moyen 6 d'immobilisation au sol par un blocage à rotation des roues 4 sur le châssis 3 via un étrier 12 qui sera décrit plus en détails par la suite.

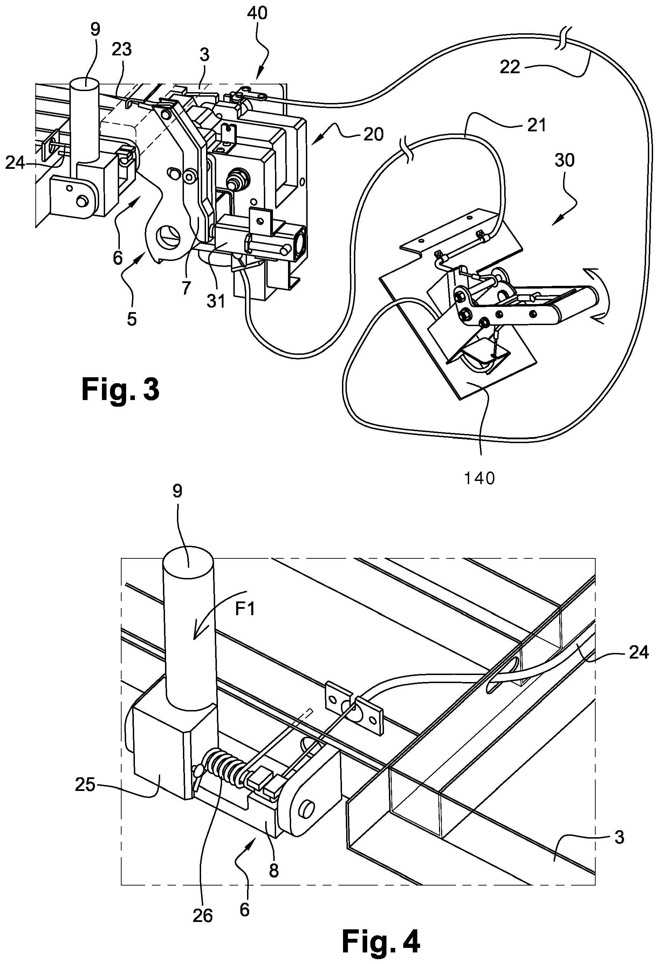

En référence aux figures 3 et 4, une partie dudit moyen 6 d'immobilisation va être à présent décrit. Cette partie concerne les éléments mis en oeuvre pour commander de manière réversible l'immobilisation de la remorque 1.

La figure 3 représente les éléments mis en oeuvre pour commander de manière réversible l'immobilisation de la remorque 1 depuis la cabine du véhicule 2 tracteur. Parmi ces éléments, un levier 7 articulé autour d'un axe Y est monté sur le moyen 5 d'attelage. Le levier 7 est articulé sélectivement entre une position de repos dans laquelle les roues 4 sont bloquées en rotation par rapport au châssis 3 et une position active dans laquelle les roues sont libres en rotation par rapport au châssis. Le passage de la position de repos à la position active s'effectue par le biais d'une poignée 30 fixée à rotation sur la structure du véhicule, de préférence dans la cabine de ce dernier.

La poignée 30 est mobile à rotation vers le haut ou vers le bas depuis une position nominale. En tirant la poignée 30 vers le haut, le câble 22 exerce un effort de traction sur un verrou 40 assurant la liaison entre les moyens 5 et 20 d'attelage.

En opérant manuellement une poussée de la poignée 30 vers le bas, le câble 21 exerce un effort de traction sur un poussoir 31 de telle sorte que le levier 7 est basculé, selon une rotation autour de l'axe Y dans un sens horaire sur le figure 3. Le poussoir 31 exerce un effort de poussée axiale sur l'extrémité inférieur du levier 7.

La poignée 30 est ainsi montée à articulation sensiblement autour d'un axe Y au véhicule 2 tracteur via un dispositif d'articulation relié à la structure même du véhicule 2 tracteur par l'intermédiaire d'une plaque 140 de liaison dédiée. Cette dernière peut également comprendre des moyens de guidage et de maintien des câbles 21 et 22.

Le levier 7 a une section transversale sensiblement en U, de telle sorte que les deux flasques latérales du U sont reliées l'une à l'autre au moyen d'une paroi de liaison contre laquelle le poussoir 31 vient en appui.

Les deux flasques latérales comprennent au niveau de leur extrémité supérieure des premières ouvertures coaxiales au travers desquelles s'étend une tige montée en force.

L'extrémité supérieure du levier 7 est reliée à un câble 23 de traction par des moyens de liaison appropriés, du type d'une tige solidaire de la poignée autour de laquelle un anneau d'extrémité du câble 23 s'étend. Le déplacement à rotation du levier 7 de sa position de repos, ici sensiblement verticale, à une position active, non visible sur les figures, du levier 7 engendre un effort de traction exercé par le câble 23 sur le moyen 6 d'immobilisation. Un tel effort de traction provoque en conséquence un changement d'état dudit moyen 6 d'immobilisation, rendant alors mobile la remorque 1.

Les deux flasques latérales comprennent également au niveau d'une zone approximativement médiane, des secondes ouvertures coaxiales au travers desquelles s'étend un arbre de rotation rendant apte le mouvement de rotation du levier 7 autour de l'axe Y.

Le levier 7 est conçu de telle manière que l'écart entre l'arbre de rotation le liant au châssis et son extrémité supérieure reliée au câble 23 soit assujetti à la course maximale du poussoir 31 et à la course utile pour opérer un changement d'état dudit moyen 6 d'immobilisation.

La figure 4 représente selon une vue en perspective partielle, la remorque 1 de la figure 2, plus particulièrement un agrandissement d'une zone dédiée à la liaison d'un moyen 9 de préhension, ici sous la forme d'une tige cintrée en U inversé dont les extrémités sont liées à rotation au châssis 3 par l'intermédiaire d'un support 25 de fixation. Au niveau de chaque extrémité de la tige cintrée, le châssis 3 comprend deux flasques parallèles, espacées l'une de l'autre et disposées en saillie hors d'un tube du châssis, entre lesquelles s'étend un support 25 sur lequel est fixée solidairement une des extrémités dudit moyen 9 de préhension.

Une seule des extrémités dudit moyen 9 de préhension est liée au châssis 3 par l'intermédiaire d'un support 25 comprenant un levier 8 qui soit du type d'une came disposée en saillie radiale hors du support 25 rotatif.

Un tel levier 8 peut comprendre un évidement conçu afin de recevoir une olive d'extrémité d'un câble 24, sachant que tout autre moyen de liaison peut être envisagé.

Ledit moyen 9 de préhension est apte à pivoter sélectivement entre une position de rangement dans laquelle les roues 4 sont bloquées en rotation au châssis et une position déployée dans laquelle les roues 4 sont libres en rotation par rapport au châssis. Les figures 1 à 4 représentent ledit moyen 9 de préhension dans sa position de rangement. Dans cette position sensiblement verticale, un basculement manuel vers le bas selon la flèche F1 engendre le déplacement du levier 8, ce qui provoque un effort de traction provoquant en conséquence un changement d'état dudit moyen 6 d'immobilisation, rendant alors mobile la remorque 1. Ledit moyen 9 de préhension permet de déplacer manuellement la remorque 1.

La conception du levier 8 est assujettie à la course utile pour opérer un changement d'état dudit moyen 6 d'immobilisation lorsque ledit moyen 9 de préhension est en position déployée, sensiblement inclinée vers l'avant (non représenté).

Ledit moyen 9 de préhension peut comprendre un moyen de rappel automatique vers sa position de rangement, de sorte que le fait de relâcher la tige cintrée engendre un état de blocage en rotation des roues au châssis 3 via ledit moyen 6 d'immobilisation qui va à présent être détaillé au regard des figures 5 et 6. Le moyen de rappel automatique peut être un ressort 26 exerçant un effort au moyen 9 de préhension.

Les extrémités des câbles 23 et 24 de traction ayant été décrites en relation avec respectivement les leviers 7 et 8, les autres extrémités des câbles 23 et 24 coopèrent chacune avec un répartiteur 13 d'efforts.

Un répartiteur 13 d'efforts est fixé sur le châssis 3 au moyen de son carter. Il peut être fixé sur le bras 34 articulé du dispositif de suspension de la roue 4, comme cela est représenté sur les figures 5 et 6.

Un tel répartiteur 13 comprend un chariot 27 mobile en translation par rapport à un carter 30. Un tel chariot 27 comprend une tige 28 de forme sensiblement cylindrique comprenant au niveau de ses extrémités libres des guides 29. Chaque guide 29 est apte à coulisser le long du carter. Du fait que les deux guides 29 sont parallèles l'un à l'autre et en appui respectivement chacun contre des parois latérales du carter 30 de section en U, la tige 27 est continuellement maintenue perpendiculaire aux parois latérales du carter 30. Chaque paroi latérale comprend une lumière de forme sensiblement oblongue le long de l'axe X, au travers desquelles les extrémités libres de la tige 27 peuvent coulisser.

La tige 27 est reliée aux câbles 23 et 24 de sorte que le déplacement d'au moins un des leviers 7 et 8 vers une position active engendre un coulissement du chariot 27 selon la flèche F2.

La tige 27 est également reliée à un étrier 12 fixé sur le bras 34 articulé via un câble 35. L'étrier 12 comprend un piston 14 muni d'au moins une dent conformée afin de venir en prise avec l'un des créneaux 15 formés en périphérie d'un disque cranté 10. L'étrier 12 est un étrier autobloquant en ce sens qu'il comprend un ressort 17 générant un effort de rappel F3 visant à déplacer le piston 14 en saillie hors de l'étrier 12.

Le disque cranté 10 est monté solidaire à rotation d'un moyen 11 sur lequel la roue 4 de la remorque est montée vissée.

Sur les figures 5 et 6, l'étrier comprend un unique piston 14 pourvu de deux dents. L'étrier 12 comprend en outre deux ressorts 17 de rappel afin d'augmenter la valeur de l'effort de rappel F3.

Le piston 14 de l'étrier est lié au chariot 27 du répartiteur 13 via le câble 35.

Lorsque l'effort F2 exercé par les leviers 7 et 8 pris séparément ou cumulativement est supérieur à l'effort F3 de rappel, les dents du piston 14 libèrent les créneaux 15 du disque, le moyeu 11 est libre à rotation sur le châssis 3.

A l'inverse, lorsque l'effort F2 exercé par les leviers 7 et 8 pris séparément ou cumulativement est inférieur à l'effort F3 de rappel issu des ressorts 17 dédiés, les dents du piston 14 s'étendent en saillie hors de l'étrier 12 afin de venir dans des créneaux 15 du disque, le moyeu 11 étant ainsi bloqué à rotation sur le châssis 3.

Chaque roue 4 peut être bloquée à rotation par ledit moyen 6 d'immobilisation réversible de sorte que les câbles 23, 24 et 35, ainsi que l'étrier 12, le répartiteur 13 d'efforts et le disque 10 cranté peuvent être doublés.

Bien entendu, l'invention n'est pas limitée aux modes ou variantes de réalisation décrits précédemment et comprends tous les équivalents techniques de ces moyens.

## Revendications

1. Remorque (1) destinée à être attelée à un véhicule (2) tracteur, la remorque comprenant un châssis (3) relié à des roues (4) et un moyen (5) d'attelage apte à la rendre solidaire au véhicule tracteur (2), et un moyen (6) d'immobilisation agissant sur au moins l'une des roues (4) afin de bloquer en rotation la roue avec le châssis (3), ledit moyen (6) d'immobilisation comprend au moins un levier (7, 8) articulé sélectivement entre une position de repos dans laquelle les roues (4) sont bloquées en rotation par rapport au châssis (3) et une position active dans laquelle les roues (4) sont libres en rotation par rapport au châssis
, **caractérisée en ce que** ledit moyen (5) d'attelage comprend un levier (7) articulé sélectivement entre une position de repos dans laquelle les roues (4) sont bloquées en rotation avec le châssis (3) et une position active dans laquelle les roues (4) sont libres en rotation par rapport au châssis, le levier (7) étant apte à être articulé par l'intermédiaire d'un dispositif de commande manuelle embarqué sur le véhicule tracteur (2).

2. Remorque (1) selon la revendication 1, **caractérisée en ce qu'**elle comprend un moyen (9) de préhension relié à pivotement au châssis (3) sélectivement entre une position de rangement dans laquelle les roues (4) sont bloquées en rotation au châssis (3) et une position déployée dans laquelle les roues (4) sont libres en rotation par rapport au châssis, ledit moyen (9) de préhension étant apte à être articulé manuellement afin d'opérer la manipulation de la remorque.

3. Remorque (1) selon la revendication précédente, **caractérisée en ce qu'**elle comprend une roue jockey (6) articulée apte à être disposée sélectivement dans une position abaissée permettant un appui avant de la remorque (1) sur le sol pour en permettre sa manipulation, ou dans une position remontée permettant de lier la remorque (1) au véhicule tracteur (2) via ledit moyen (5) d'attelage.

4. Remorque (1) selon l'une quelconque des revendications 1 à 3, **caractérisée en ce que** ledit moyen (6) d'immobilisation comprend un disque (10) cranté monté à rotation avec un moyeu (11) de fixation d'une roue (4) sur le châssis (3) et un étrier (12) autobloquant apte à venir en prise avec le disque (10) cranté.

5. Remorque (1) selon l'une quelconque des revendications 1 à 4, **caractérisée en ce que** ledit moyen (6) d'immobilisation comprend un répartiteur (13) d'effort reliant un étrier (12) autobloquant à au moins un levier (7, 8) de sorte qu'en position active du levier (7, 8), le répartiteur (13) transmets à l'étrier (12) autobloquant un contre-effort s'opposant au blocage de la roue (4).

6. Remorque (1) selon l'une quelconque des revendications 1 à 5, **caractérisée en ce que** l'étrier (12) autobloquant comprend au moins une came (14) mobile, un carter (16) et un ressort (17) de rappel de la came (14) mobile en saillie hors du carter (16) dans une position de blocage en rotation du disque (10) cranté.

7. Véhicule (2) tracteur comportant un moyen (20) d'attelage réversible apte à coopérer avec le moyen (5) d'attelage complémentaire de la remorque (1) conforme à l'une quelconque des revendications précédentes, **caractérisé en ce que** le véhicule (2) tracteur est du type d'un quadricycle.

8. Véhicule (2) tracteur selon la revendication 7, **caractérisé en ce qu'**il comprend une poignée (30) articulée sélectivement et manuellement entre une position de roulage dans laquelle le poussoir (31) est apte à exercer un effort d'appui sur le levier (7) de la remorque (1) pour la rendre mobile et une position d'immobilisation de la remorque (1) dans laquelle le poussoir (31) est apte à libérer le levier (7) d'un appui pour immobiliser la remorque (1).

9. Véhicule (2) selon la revendication 8, **caractérisé en ce que** la poignée (30) est reliée à un crochet afin de libérer la liaison réversible entre ledit moyen (20) d'attelage du véhicule (2) tracteur et ledit moyen (5) d'attelage complémentaire de la remorque (1).

10. Ensemble comportant un véhicule (2) tracteur selon la revendication 7 ou 8 assemblé à une remorque (1) selon l'une quelconque des revendications 1 à 6, **caractérisé en ce que** la poignée (30) est disposé à proximité d'un poste de conduite du véhicule tracteur de sorte que les opérations réversibles d'attelage de la remorque (1) au véhicule (2) tracteur s'effectuent depuis le poste de conduite du véhicule (2) tracteur.

## Patentansprüche

1. Anhänger (1), welcher dazu bestimmt ist, an ein Zugfahrzeug (2) angekuppelt zu werden, wobei der Anhänger ein Fahrgestell (3), das mit Rädern (4) verbunden ist, und ein Kupplungsmittel (5), das geeignet ist, ihn mit dem Zugfahrzeug (2) fest zu verbinden, und ein Immobilisierungsmittel (6), das auf wenigstens eines der Räder (4) wirkt, um das Rad gegen Verdrehen bezüglich des Fahrgestells (3) zu sichern, umfasst, wobei das Immobilisierungsmittel (6) wenigstens einen Hebel (7, 8) umfasst, der selektiv zwischen einer Ruheposition, in welcher die Räder (4) gegen Verdrehen bezüglich des Fahrgestells (3) gesichert sind, und einer aktiven Position, in welcher die Räder (4) frei drehbar bezüglich des Fahrgestells sind, gelenkig schwenkbar ist,
**dadurch gekennzeichnet, dass** das Kupplungsmittel (5) einen Hebel (7) umfasst, der selektiv zwischen einer Ruheposition, in welcher die Räder (4) gegen Verdrehen bezüglich des Fahrgestells (3) gesichert sind, und einer aktiven Position, in welcher die Räder (4) frei drehbar bezüglich des Fahrgestells sind, gelenkig schwenkbar ist, wobei der Hebel (7) geeignet ist, mittels einer manuellen Steuervorrichtung gelenkig geschwenkt zu werden, die sich an Bord des Zugfahrzeugs (2) befindet.

2. Anhänger (1) nach Anspruch 1, **dadurch gekennzeichnet, dass** er ein Greifmittel (9) umfasst, das mit dem Fahrgestell (3) selektiv schwenkbar zwischen einer Verstauposition, in welcher die Räder (4) gegen Verdrehen bezüglich des Fahrgestells (3) gesichert sind, und einer Arbeitsposition, in welcher die Räder (4) frei drehbar bezüglich des Fahrgestells sind, verbunden ist, wobei das Greifmittel (9) geeignet ist, manuell gelenkig geschwenkt zu werden, um die Handhabung des Anhängers vorzunehmen.

3. Anhänger (1) nach dem vorhergehenden Anspruch, **dadurch gekennzeichnet, dass** er ein gelenkig angebrachtes Stützrad (6) umfasst, das geeignet ist, selektiv in einer abgesenkten Position angeordnet zu werden, die eine vordere Abstützung des Anhängers (1) auf dem Boden ermöglicht, um dadurch seine Handhabung zu ermöglichen, oder in einer angehobenen Position, die es ermöglicht, den Anhänger (1) über das Kupplungsmittel (5) mit dem Zugfahrzeug (2) zu verbinden.

4. Anhänger (1) nach einem der Ansprüche 1 bis 3, **dadurch gekennzeichnet, dass** das Immobilisierungsmittel (6) eine Zahnscheibe (10), die mit einer Befestigungsnabe (11) eines Rades (4) am Fahrgestell (3) angebracht ist, und einen selbsthemmenden Bügel (12), der geeignet ist, mit der Zahnscheibe (10) in Eingriff zu gelangen, umfasst.

5. Anhänger (1) nach einem der Ansprüche 1 bis 4, **dadurch gekennzeichnet, dass** das Immobilisierungsmittel (6) einen Kraftverteiler (13) umfasst, der einen selbsthemmenden Bügel (12) mit wenigstens einem Hebel (7, 8) derart verbindet, dass in der aktiven Position des Hebels (7, 8) der Verteiler (13) auf den selbsthemmenden Bügel (12) eine Gegenkraft überträgt, die dem Blockieren des Rades (4) entgegenwirkt.

6. Anhänger (1) nach einem der Ansprüche 1 bis 5, **dadurch gekennzeichnet, dass** der selbsthemmende Bügel (12) wenigstens einen beweglichen Nocken (14), ein Gehäuse (16) und eine Rückholfeder (17) für den beweglichen Nocken (14), der in einer Position der Sicherung der Zahnscheibe (10) gegen Verdrehen aus dem Gehäuse (16) herausragt, umfasst.

7. Zugfahrzeug (2), welches ein Mittel (20) zur reversiblen Kupplung aufweist, das geeignet ist, mit dem komplementären Kupplungsmittel (5) des Anhängers (1) gemäß einem der vorhergehenden Ansprüche zusammenzuwirken, **dadurch gekennzeichnet, dass** das Zugfahrzeug (2) vom Typ eines Quads ist.

8. Zugfahrzeug (2) nach Anspruch 7, **dadurch gekennzeichnet, dass** es einen Griff (30) umfasst, der selektiv und manuell gelenkig schwenkbar ist zwischen einer Fahrposition, in welcher der Stößel (31) in der Lage ist, eine Druckkraft auf den Hebel (7) des Anhängers (1) auszuüben, um diesen bewegbar zu machen, und einer Position der Immobilisierung des Anhängers (1), in welcher der Stößel (31) in der Lage ist, den Hebel (7) von einem Druck zu befreien, um den Anhänger (1) zu immobilisieren.

9. Fahrzeug (2) nach Anspruch 8, **dadurch gekennzeichnet, dass** der Griff (30) mit einem Haken verbunden ist, um die reversible Verbindung zwischen dem Kupplungsmittel (20) des Zugfahrzeugs (2) und dem komplementären Kupplungsmittel (5) des Anhängers (1) zu lösen.

10. Anordnung, welche ein Zugfahrzeug (2) nach Anspruch 7 oder 8 umfasst, das mit einem Anhänger (1) nach einem der Ansprüche 1 bis 6 zusammengefügt ist, **dadurch gekennzeichnet, dass** der Griff (30) in der Nähe eines Cockpits des Zugfahrzeugs angeordnet ist, derart, dass die reversiblen Arbeitsvorgänge des Ankuppelns des Anhängers (1) an das Zugfahrzeug (2) vom Cockpit des Zugfahrzeugs (2) aus durchgeführt werden.

## Claims

1. Trailer (1) intended to be coupled to a towing vehicle (2), the trailer comprising a chassis (3) connected to wheels (4) and a coupling means (5) able to connect it to the towing vehicle (2), and an immobilization means (6) acting on at least one of the wheels (4) so as to block the wheel in terms of rotation with the chassis (3), the said immobilization means (6) comprising at least one lever (7, 8), articulated selectively between a rest position in which the wheels (4) are blocked in terms of rotation with respect to the chassis (3) and an active position in which the wheels (4) are free to rotate with respect to the chassis, **characterized in that** said coupling means (5) comprises a lever (7) articulated selectively between a rest position in which the wheels (4) are blocked in terms of rotation with the chassis (3) and an active position in which the wheels (4) are free to rotate with respect to the chassis, the lever (7) being able to be articulated by means of a manual control device mounted on board the towing vehicle (2).

2. Trailer (1) according to Claim 1, **characterized in that** it comprises a grip means (9) pivot-connected to the chassis (3) to pivot selectively between a storage position in which the wheels (4) are blocked in terms of rotation to the chassis (3) and a deployed positon in which the wheels (4) are free to rotate with respect to the chassis, said grip means (9) being able to be articulated by hand so as to perform handling of the trailer.

3. Trailer (1) according to the preceding Claim, **characterized in that** it comprises an articulated jockey wheel (6) able to be placed selectively in a lowered position allowing the front of the trailer (1) to rest on the ground so that the trailer can be handled, or in a raised position allowing the trailer (1) to be connected to the towing vehicle (2) via the said coupling means (5).

4. Trailer (1) according to any one of Claims 1 to 3, **characterized in that** said immobilization means (6) comprises a notched disk (10) mounted with the ability to rotate with a hub (11) for the fixing of a wheel (4) to the chassis (3) and a self-locking caliper (12) able to come into engagement with the notched disk (10).

5. Trailer (1) according to any one of Claims 1 to 4, **characterized in that** said immobilization means (6) comprises a load proportioning device (13) connecting a self-locking caliper (12) to at least one lever (7, 8) so that when the lever (7, 8) is in the active position, the proportioning device (13) transmits to the self-locking caliper (12) an opposing force that counters the blocking of the wheel (4).

6. Trailer (1) according to any one of Claims 1 to 5, **characterized in that** the self-locking caliper (12) comprises at least one mobile cam (14), a casing (16) and a cam return spring (17) for the mobile cam (14) projecting out from the casing (16) in a position of blocking the rotation of the notched disk (10).

7. Towing vehicle (2) comprising a reversible coupling means (20) able to collaborate with the complementary coupling means (5) of the trailer (1) according to any one of the preceding Claims, **characterized in that** the towing vehicle (2) is of the four-wheeler type.

8. Towing vehicle (2) according to Claim 7, **characterized in that** it comprises a handle (30) articulated selectively and by hand between a running position in which the push-rod (31) is able to apply a pressing force to the lever (7) of the trailer (1) to cause it to move and a trailer (1) immobilization position in which the push-rod (31) is able to release the lever (7) from pressure in order to immobilize the trailer (1).

9. Vehicle (2) according to Claim 8, **characterized in that** the handle (30) is connected to a hook so as to release the reversible connection between said coupling means (20) of the towing vehicle (2) and said complementary coupling means (5) of the trailer (1).

10. Assembly comprising a towing vehicle (2) according to Claim 7 or 8 assembled with a trailer (1) according to any one of Claims 1 to 6, **characterized in that** the handle (30) is positioned near a driving position of the towing vehicle so that the reversible operations of coupling the trailer (1) to the towing vehicle (2) can be performed from the driving position of the towing vehicle (2).
